# EUROPEAN PATENT SPECIFICATION

(11) **EP 0 267 637 B1**
(45) Date of publication and mention of the grant of the patent: **18.11.1993**
(21) Application number: 87201961.7
(22) Date of filing: 12.10.1987
(51) Int. Cl.: C08B 30/04

(54) **A process for producing starch from cereals**
Verfahren zur Herstellung von Stärke aus Getreide
Procédé pour la préparation d'amidon à partir de céréales

(30) Priority: 11.11.1986 NL 8602850
(43) Date of publication of application: 18.05.1988
(73) Proprietor: DORR-OLIVER INCORPORATED, Stamford Connecticut 06904-9312 (US); Alko Ltd., 05200 Rajamäki (FI)
(72) Inventor: van der Ham, Wim, NL-3871 JV Hoevelaken (NL); Lehmussaari, Annti, SF-00101 Helsinki (FI)
(74) Representative: Kooy, Leendert Willem

(56) References cited:
- DE-C- 804 908
- US-A- 2 821 501
- CHEMICAL ABSTRACTS, vol. 69, 1968, page 1116, abstract no. 11589z, Columbus, Ohio, US; & N. TOYAMA et al.: "Production of sweet potato starch using a cell-separating enzyme and cellulase. II. Enzymic isolation of starch from raw starch waste made by a continous juicer and from sweet potato powder prepared by the dry milling process"
- Proc.Symp Bioconversion of plant Row material by microorganimes, pp.105-112(1982) and Pectinase...""Biotecnal Bioeng.25(6), pp 1685-1690(1983)

## Description

The invention relates to a process for producing starch from cereals, especially from barley.

DE-C-804,908 describes a process for producing starch from rye and from other starch containing raw materials comprising subjecting dry-ground rye grains to a treatment in water with an enzyme mixture such that compounds present in the grains, except starch, are hydrolyzed and solubilized, and recovering starch. The compounds to be hydrolyzed are slime forming compounds, e.g. hemicellulose slimes. The enzyme mixture is obtained from microorganisms such as Aspergillus oryzae and Rhizopus oryzae. The enzyme treatment is carried out at 30°C for 24 hours. At the selected temperature the diastatic, i.e. amylolytic enzymes present in the enzyme mixture do not hydrolyze the starch.

The Finnish patent 56.552 describes a procedure for producing starch from barley, in which the whole barley grains are steeped in water warmed up to 40-55°C, and containing 0.3 % sulphur dioxide for 5-48 hours, the steeped grains are ground with process water so that the hull parts are left relatively intact and the endospermic part of the grains is comminuted into particles less than 0.1 mm in size, the ground barley is sifted with water, the starch is separated from the filtrate using difference in sedimentation rate, and the heavy starch fraction is washed and concentrated by a plurality of steps based on difference in sedimentation rate.

In this process different fractions of products are obtained in the different steps. The grains are separated to a starch fraction, protein fraction and fibre fraction. Normally all products are dried to increase the storage stability by different kinds of dryers, or soluble fractions by evaporators.

Several methods and agents have been used to improve the separation process like pH adjustment or heat coagulation of proteins from process water.

U.S. patent 4 428 967 discloses a process for the production from barley of a maltose syrup as main product, comprising adding to barley flour an enzyme containing beta-glucanase and preferably also alpha-amylase. Beta-glucanase is added to partially hydrolyze the beta-glucans present and to reduce the viscosity to workable levels. The optionally alpha-amylase added serves to initiate the hydrolysis of starch already. The enzyme preparations mentioned in the description and the examples all exhibit alpha-amylase activity. Moreover, this process provides starch of inferior quality, which is used as intermediate for the production of maltose syrup.

The present invention has the object among other things to change the mass balance in starch production so that the amount of solubles will be maximized to increase the amount of raw material leaving the process via an evaporator while proportionally the amount of raw material being dried in dryers is reduced. The fact is that the evaporation costs of water in an evaporator are by far less expensive compared to the evaporation costs of water in dryers.

It is another object of the present invention to further improve the separation of the different product fractions.

According to the present invention a process is provided for producing starch from cereal comprising subjecting dry-ground dehusked cereal grains to a treatment in water with an enzyme mixture such that compounds present in the grains, except starch, are hydrolyzed and solubilized, and recovering starch, **characterized in that** barley is used as cereal and the process comprises the consecutive steps of:
a) subjecting dry-ground dehusked grains to treatment in water at 40-50°C with an enzyme mixture having activities selected from proteolytic, cellulase, hemicellulase, beta-glucanase and pectinase activities, the enzyme mixture being obtained from the microorganism Trichoderma viridae and the mixture being without alpha-amylase activity in the temperature range of 40-50°C,
b) optionally homogenizing the product obtained,
c) extracting the starch from the product obtained, leaving fibres,
d) concentrating the starch giving a crude starch fraction and a process water fraction,
e) separating proteins from the crude starch fraction obtained, and
f) separating the protein-free crude starch fraction obtained into a primary and secondary starch fraction.

The process of the invention has as advantages with respect to known processes, that more solutes are obtained, the separation of the different fractions is improved, less process water is needed and more pure primary starch is obtained.

The process of the invention may for example be applied when one proceeds according to the enclosed scheme.

Step a) starts from ground dehusked grains. Preferably for this purpose the whole grains are first dry milled and sifted, hulls, and fibres being separated. The flour obtained is then mixed in a mixer in a ratio of 2.5/1 to 4/1 with process water heated to approximately 40-50°C, with the added enzyme mixture and with the entrained enzymes. With process water is meant, used water recirculated from a down-stream process step. The slurry thus obtained is transferred to a tank wherein the enzyme action takes place. The enzyme treatment may vary in duration, but is conveniently two hours.

The enzymes employed hydrolyse and solubilise compounds present in the grains like proteins, beta-glucans, hemicelluloses and pectine, while starch is not affected at all. This action leads to softening of cell structures and easier liberation of embedded starch granules followed by high starch yield. Hydrolysing of substantial amount of insolubles to solubles leads to improved mechanical dewatering of by-products thus decreasing the amount of water to be evaporated therefrom in later stages. The principal enzymes to be employed are enzymes with proteolytic, cellulase, hemicellulase, beta-glucanase and pectinase activity. A suitable enzyme mixture is e.g. Alko Econase 20, obtained from the microorganism Tricoderma viridae and comprising the above activities. The amount of enzyme mixture is proportional to the required reaction time.

In this example the product obtained by the enzyme treatment is then following dewatering homogenised in step b).

Then in step c) starch is extracted from the homogenised product by means of sieves retaining fibres and through which crude starch is passing. The starch extraction/fibre washing occurs in a plurality of stages in which the fibres are washed in countercurrent with a relatively small amount of washwater. The fibre fraction is dewatered and dried.

The raw starch fraction is then in step d) concentrated, producing a liquid containing solubles (process water fraction) besides a concentrated crude starch material. The process water fraction is partly evaporated, partly recirculated to the process. The product obtained by evaporating may be used together with the above-mentioned fibres as animal feed.

In step e) proteins are separated from the starch material obtained, conveniently by centrifuging. The protein fraction is concentrated, dewatered and dried. Finally in step f) the crude starch is separated in a primary (A) and a secondary(B) starch fraction by means of gravitation or centrifugal force, preferably in a multicyclone unit. Starch B has an inferior quality than starch A; starch B still contains protein. The starch B fraction is dewatered and may then be used conveniently for any production where the starch quality is not critical, e.g. in fermentation. The starch A fraction is washed, dewatered and dried.

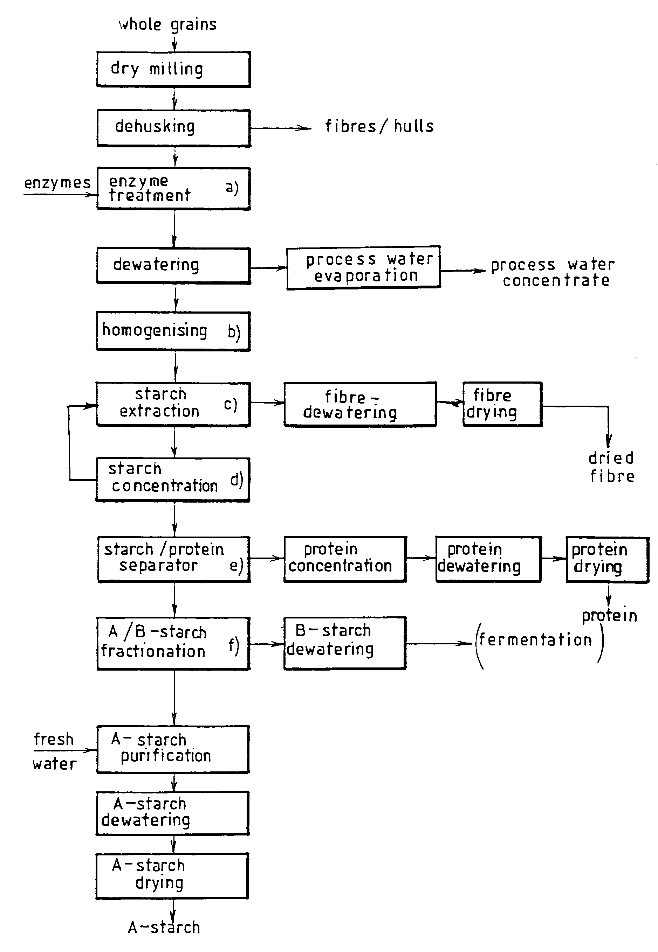

## Claims

1. A process for producing starch from cereal comprising subjecting dry-ground dehusked cereal grains to a treatment in water with an enzyme mixture such that compounds present in the grains, except starch, are hydrolyzed and solubilized, and recovering starch, **characterized in that** barley is used as cereal and the process comprises the consecutive steps of:
a) subjecting dry-ground dehusked grains to treatment in water at 40-50°C with an enzyme mixture having activities selected from proteolytic, cellulase hemicellulase, beta-glucanase and pectinase activities, the enzyme mixture being obtained from the microorganism Trichoderma viridae and the mixture being without alpha-amylase activity in the temperature range of 40-50°C,
b) optionally homogenizing the product obtained,
c) extracting the starch from the product obtained, leaving fibres,
d) concentrating the starch giving a crude starch fraction and a process water fraction,
e) separating proteins from the crude starch fraction obtained, and
f) separating the protein-free crude starch fraction obtained into a primary and secondary starch fraction.

## Patentansprüche

1. Verfahren zur Herstellung von Stärke aus Getreide, umfassend das Einwirkenlassen einer Behandlung in Wasser mit einem Enzym-Gemisch auf trocken gemahlene enthülste Getreidekörner in solcher Weise, daß die in den Körnern vorhandenen Verbindungen, mit Ausnahme der Stärke, hydrolysiert und solubilisiert werden, und das Isolieren der Stärke, dadurch gekennzeichnet, daß Gerste als Getreide eingesetzt wird und das Verfahren die nachstehend genannten aufeinanderfolgenden Schritte umfaßt:
a) Einwirkenlassen einer Behandlung in Wasser bei 40 °C bis 50 °C auf trocken gemahlene enthülste Körner mit einem Enzym-Gemisch, das Aktivitäten aufweist, die ausgewählt sind aus proteolytischen, Cellulase-, Hemicellulase-, β-Glucanase- und Pectinase-Aktivitäten, wobei das Enzym-Gemisch aus dem Mikroorganismus *Trichoderma viridae* erhalten wird und das Gemisch im Temperaturbereich von 40 °C bis 50 °C ohne α-Amylase-Aktivität ist,
b) gegebenenfalls Homogenisieren des erhaltenen Produkts,
c) Extrahieren der Stärke aus dem erhaltenen Produkt unter Zurücklassen von Fasern,
d) Konzentrieren der Stärke zur Bildung einer Rohstärke-Fraktion und einer Prozeßwasser-Fraktion,
e) Abtrennen der Proteine aus der erhaltenen Rohstärke-Fraktion und
f) Auftrennen der erhaltenen proteinfreien Rohstärke-Fraktion in eine primäre und eine sekundäre Stärke-Fraktion.

## Revendications

1. Procédé de fabrication d'amidon à partir de céréales, comprenant l'application aux grains de céréale mondés et moulus d'un traitement dans l'eau avec un mélange d'enzymes de manière que des composés présents dans les grains, à l'exception de l'amidon, s'hydrolysent et se solubilisent, puis la séparation de l'amidon, caractérisé en ce que la céréale utilisée est l'orge, et le procédé comprend les étapes consécutives suivantes :
a) l'application aux grains mondés et moulus d'un traitement dans l'eau à 40-50 °C avec un mélange d'enzymes ayant des activités choisies parmi les activités protéolytique, de cellulase, d'hémicellulase, de bêta-glucanase et de pectinase, le mélange d'enzymes étant obtenu à partir du microorganisme Trichoderma viridae et le mélange n'ayant pas d'activité d'alpha-amylase dans la plage de températures de 40 à 50 °C,
b) l'homogénéisation éventuelle du produit obtenu,
c) l'extraction de l'amidon du produit obtenu, afin qu'il reste les fibres,
d) la concentration de l'amidon donnant une fraction d'amidon brute et une fraction d'amidon traitée,
e) la séparation des protéines de la fraction d'amidon brute obtenue, et
f) la séparation de la fraction brute d'amidon obtenue dépourvue de protéines en fractions primaire et secondaire d'amidon.
